# EUROPEAN PATENT APPLICATION

(11) **EP 1 717 329 A1**
(43) Date of publication of application: **02.11.2006**
(21) Application number: 05703952.1
(22) Date of filing: 14.01.2005
(51) Int. Cl.: C22C 38/00, C22C 38/50, H01M 8/02, H01M 8/10

(54) **FERRITIC STAINLESS STEEL FOR SOLID POLYMER FUEL CELL SEPARATOR AND SOLID POLYMER FUEL CELL**

(30) Priority: 28.01.2004 JP 2004019333
(71) Applicant: NISSHIN STEEL CO., LTD., Chiyoda-ku Tokyo 100-8366 (JP)
(72) Inventor: OKU, Manabu, c/o Steel & Technology, Shunan-shi, Yamaguchi 746-8666 (JP); SHIRAYAMA, Kazushi c/o Steel & Technology, Shunan-shi, Yamaguchi 746-8666 (JP); FUJIMOTO, Hiroshi c/o Steel & Technology, Shunan-shi, Yamaguchi 746-8666 (JP)
(74) Representative: Müller-Boré & Partner Patentanwälte
(86) International application number: PCT/JP2005/000724
(87) International publication number: WO 2005/073423

(57) **Abstract**

A ferritic stainless steel for use as separators of polymer electrolyte fuel cells (PEFCs) has a composition consisting of, by mass, 0.020% or less of C, 0.50% or less of Si, 0.50% or less of Mn, 0.020-0.080% of P, 0.005% or less of S, 0.50% or less of Ni, 28-32% of Cr, 1.5-2.5% of Mo, 0.80% or less of Cu, 0.03-0.25% of Nb, 0.03-0.25% of Ti, 0.04-0.20% of Al, 0.020% or less of N, optionally 0.2-1.0% of V and the balance being Fe except inevitable impurities with C+N being 0.025% or less and Ni+Cu being 0.80% or less. The stainless steel separator maintains low contact resistance in a state exposed to a wet and acidic environment inside a fuel cell for a long while with less metal dissolution.

## Description

### BACKGROUND OF THE INVENTION

### Field of the Invention

The present invention relates to stainless steel for use as separators built in polymer electrolyte (hereinafter referred to as "PE") fuel cells, which are promising power sources for automobiles, domestic cogeneration systems and so on, and also relates to stainless steel separators suitable for PE fuel cells, as well as PE fuel cells with stainless steel separators installed therein.

### Description of Related Art

There have been proposed various fuel cells such as phosphate type, molten carbonate type, PE type and solid oxide type. Especially, PE fuel cells are estimated as a promising model due to extremely high power-generating efficiency without generation of waste gas such as CO₂, NOₓ and SOₓ. The PE fuel cells also have the advantage that they can be operated at a temperature of 100°C or lower in a short starting-time. Accounting these features, application of the PE fuel cells to power sources for automobiles, in *situ* power generators and power sources for mobile devices has been energetically researched and developed.

A PE fuel cell is built up by stacking several tens to several hundreds of cell units, in order to produce an electric power available for practical uses. Each cell unit has an ion-exchange membrane, which acts as a proton-conducting electrolyte, made of a solid polymeric resin with proton-exchange radicals. The membrane is installed in the manner that a fuel gas is fed to one side, while an oxidizing gas, e.g. air or oxygen, is fed to the opposite side.

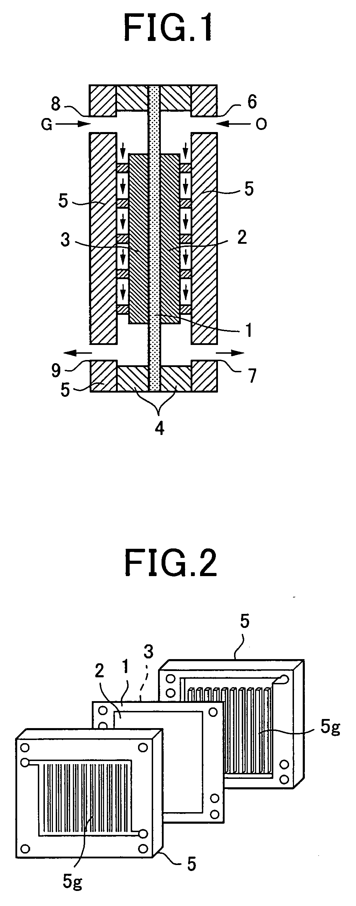

For instance, a cathode 2 and an anode 3 are individually bonded to both sides of an ion-exchange membrane 1, and separators 5 are disposed at positions facing through gaskets 4 to the electrodes 2 and 3, as shown in Fig. 1. A supply port 6 and an exhaust port 7 for an oxidizing gas O are formed in the separator 5 at the side of the cathode 2, and a supply port 8 and an exhaust port 9 for a fuel gas G are formed in the other separator 5 at the side of the anode 3. Smooth introduction and uniform distribution of the gases O and G are attained by a plurality of grooves 5g formed in the separators 5, as shown in Fig. 2.

Wet hydrogen, which is pre-humidified by passing a hydrogen stream through hot water kept at 90°C or so, is used as a fuel gas G in order to enhance ion conductivity of an ion-exchange membrane 1. An oxidizing gas O is sometimes pre-humidified, too. When such gases G and O are fed into a cell unit, separators 5 are exposed to heavily moisturized atmospheres. Decomposition products, e.g. SO₄²⁻ and F⁻, of a resinous component of the ion-exchange membrane 1 often adhere onto surfaces of the separators 5. As a result, the separators 5 are suffered from corrosion and dissolution in a corrosive atmosphere. Metal ions from the separators 5 accelerate decomposition of the ion-exchange membrane 1 and poison catalytic particles in the electrodes 2 and 3. In this consequence, dissolution of metal ions shall be inhibited for ensuring high power-generating efficiency and durability of fuel cells.

Since chemical stability of separator material is necessary for high performance of a fuel cell as the above, conventional separators are prepared by cutting and machining carbon blocks or compression-molding carbonate resins to objective profiles. However, such processing is expensive and it is difficult to offer thin-walled separators, which are demanded for lightening fuel cells. Instead of the carbon separators, employment of stainless steels, which can be pressed to objective profiles, as separators of fuel cells has been researched and examined, as disclosed in JP 3097690 B and JP 3269479 B.

Stainless steels, which are proposed as separator material for fuel cells, contain Cr and Mo as main elements for improvement of corrosion resistance. Cr and Mo contents are controlled within ranges of 10.5-35 mass % and 0.2-6.0 mass %, respectively. Ti and Nb are sometimes added as additional elements. High corrosion-resistant steels, e.g. SUS436 and SUS444, alloyed with Cr, Mo, Ti and/or Nb exhibit good corrosion-resistance in an acidic environment but allow dissolution of metallic components during propagation of corrosion. In this sense, the Cr-Mo steels do not have sufficient corrosion resistance in internal atmospheres of fuel cells to which separators are exposed. A power decline in a short time is actually noted due to significant dissolution of metal ions in a fuel cell with separators made of high corrosion-resistant steel such as SUS436 or SUS444.

SUS447J1, based on 30Cr-2Mo steel, exhibits excellent corrosion-resistance among ferritic stainless steels. The steel SUS447J1 also has the advantage that dissolution of metals is surprisingly suppressed in comparison with the other type stainless steels. However, the steel SUS447J1 unfavorably has high contact resistance, since its surface is coated with a passive-state film, i.e. a mixed film of chromium oxide and hydroxide, more stable than the other type ferritic stainless steels. If the passive-state film is un-uniform in thickness and has faults therein, dissolution of metals is promoted through the faults, resulting in significant degradation of performance.

On the assumption that a naked ferritic stainless steel, which has low contact resistance and the same anti-dissolving property as SUS447J1, can be employed as separator material for fuel cells, lightweight separators are provided at a low cost , resulting in development of fuel cells to various fields.

By the way, it is desirable to offer naked stainless steel sheets, which well fit to individual use of fuel cells. Namely, the anti-dissolving property is the most important factor for fuel cells of domestic *in situ* co-generation systems, which are estimated to be operated over several ten thousand hours in total. A decrease in contact resistance is the most important factor in fuel cells for automobiles, in order to save a space for mounting the fuel cells.

### SUMMARY OF THE INVENTION

The inventors have researched and examined effects of alloying elements on corrosion of separators and dissolution of metals in internal atmospheres of fuel cells, and discovered that controlled compositions of ferritic stainless steels effectively improve performance of separators.

The invention has an object to provide fuel cells excellent in durability on the basis of the newly found relationship between the composition of the ferritic stainless steel and performance of fuel cells.

The present invention proposes a ferritic stainless steel for use as separators of PE fuel cells. The ferritic stainless steel consists of, by mass, 0.020% or less of C, 0.50% or less of Si, 0.50% or less of Mn, 0.020-0.080% of P, 0.005% or less of S, 0.50% or less of Ni, 28-32% of Cr, 1.5-2.5% of Mo, 0.80% or less of Cu, 0.03-0.25% of Nb, 0.03-0.25% of Ti, 0.04-0.20% of Al, 0.020% or less of N, optionally 0.2-1.0% of V and the balance being Fe except inevitable impurities. A total of C and N is controlled to 0.025% or less, and a total of Ni and Cu is controlled to 0.80% or less.

### BRIEF DESCRIPTION OF THE DRAWINGS

Fig. 1 is a sectional view illustrating an internal structure of a fuel cell unit having a solid polymer membrane as an electrolyte.
Fig. 2 is an assembling view of a fuel cell unit

### DETAILED DESCRIPTION OF THE INVENTION

A passive-state film on a surface of a stainless steel sheet is essential for corrosion-resistance but causes an unfavorable increase in contact resistance, since it is composed of metal oxides and hydroxides with high electric resistivity. In correspondence with toughness of the passive-state film, the corrosion-resistance is more improved but the contact resistance is more raised. Namely, improvement of corrosion-resistance is generally incompatible with a decrease in contact resistance. In this regard, the inventors searched for an optimum alloy design capable of suppressing dissolution of metals, and researched and examined effects of additional elements on a decrease in contact resistance without substantial degradation of the anti-dissolving property.

In the course of researching and examining, the inventors noted massive dissolution of metals from 18Cr austenitic stainless steel containing 3 mass % or more of Cu. The dissolved metals were mostly Cu and Ni. Fe ion, harmful on electrolyte membranes, was also detected. A reason of such an increase in dissolution of metals is not necessarily clarified, but probably explained as follows:
Cu and Ni are diffused from a steel base to a passive-state film during formation of the passive-state film on a surface of the Cu and Ni-containing steel. Cu and Ni are dissolved from the passive-state film during operation of a fuel cell. The dissolution of Cu and Ni causes faults in the passive-state film, and Fe is eventually dissolved through the faults from the steel base.

Then, the inventors have researched another type ferritic stainless steel, wherein ratios of Cu and Ni were decreased to suppress dissolution of metals, and discovered that properties necessary for separator material are imparted to the stainless steel by controlling Cr to 28 % or more, Mo to 1.5 % or more and Ni+Cu to 0.80 % or less. Namely, increases of Cr and Mo in the ferritic stainless steel to highest possible ratios without degradation of productivity lead to acceleration of Cr concentration in a passive-state film, so that the passive-state film well suppresses dissolution of metals even if Ni and Cu are somewhat included in the passive-state film.

Furthermore, the inventors have researched and examined effects of additional elements in the alloy system containing Cr and Mo, and discovered that anti-dissolving property is somewhat enhanced and contact resistance is further lowered by addition of P at a ratio (concretely 0.020 % or more, preferably 0.030 % or more) more than an ordinary value in conventional ferritic stainless steels. The effects of P are probably explained as follows: When a P-alloyed stainless steel was used as a separator of a fuel cell, P was concentrated in a surface of the separator after performance test of a fuel cell, as compared with the surface before the performance test. The concentration of P means incorporation of phosphorous compounds in the passive-state film, resulting in improvement of conductivity. Dissolution of metals may be suppressed by re-adhesion of P, which is once dissolved in an acidic atmosphere of the fuel cell, and formation of phosphorous compounds.

As the above, the anti-dissolving property is improved by proper control of Cr and Mo, and contact resistance is decreased by strict control of P without harmful influences on corrosion-resistance of stainless steel itself. Thus, the inventive ferritic stainless steel is useful as separator material, excellent in formability and productivity in comparison with graphite, for fuel cells. When separators made of the ferritic stainless steel are built in cell units, fuel cells with high power-generating efficiency and less internal loss originated in Joule's heat are assembled by stacking a plurality of cell units together. Especially, dissolution of metals from the separators is suppressed at an extremely lower level, which can not be expected from separators made of conventional ferritic stainless steels, so that the separators are suitable for various fuel cells involving domestic co-generation systems which are often operated over ten thousand hours in total.

Effects of alloying elements of the inventive ferritic stainless steel for use as separator material for fuel cells will become apparent from the following explanation.

### [C, N: 0.020 % or less]

C and N are elements harmful on formability and low-temperature toughness of ferritic stainless steel. Especially in the inventive alloy system containing Cr and Mo at relatively high ratios, C and N contents are preferably controlled as lower as possible in order to ensure proper formability and low-temperature toughness. Therefore, upper limits of C and N are both determined at 0.020 %, with a total of C and N being not more than 0.025 %. A value of C + N is preferably controlled to 0.020 % or less in order to impart excellent formability and low-temperature toughness to the stainless steel.

### [Si, Mn: 0.50 % or less]

Both of Si and Mn are preferably controlled at lower ratios, since Si is an element for hardening ferritic stainless steel, while Mn is an element harmful on corrosion-resistance. An upper limit each of Si and Mn is determined at 0.50 %.

### [P: 0.020-0.080 %]

P is an element, which surprisingly improves corrosion-resistance, general corrosion-resistance and anti-dissolving property of ferritic stainless steel as separators of fuel cells in an acidic environment with high humidity. The element P is also effective for a decrease in contact resistance. These effects of P are noted at 0.020 % or more and become intensive at 0.030 % or more. However, the stainless steel becomes harder and inferior in formability as an increase of P. In this sense, an upper limit of P is determined at 0.80 %. A preferable ratio of P is within a range of 0.030-0.060 % for improvement of formability in addition to anti-dissolving property and reduction of contact resistance.

### [S: 0.005 % at most]

S shall be controlled to a lowest possible level, since it is an element harmful on corrosion-resistance of stainless steel. In the inventive alloy system, an upper limit of S is determined at 0.005 %.

### [Ni: 0.50 % at most and Cu: 0.80 % at most]

Ni and Cu are effective for general corrosion-resistance in an acidic environment and remarkably improve low-temperature toughness of ferritic stainless steel even at small ratios, but excess Ni and Cu lead to dissolution of metals. Therefore, an upper limit each of Ni and Cu is determined at 0.50 % and 0.80 %, respectively, with a total of Ni and Cu being 0.80 % at most. Ni and Cu contents are preferably determined within ranges of 0.15-0.35 % and 0.20-0.50 %, respectively with Ni + Cu being not 0.50 % at most, for improvement of general corrosion-resistance and low-temperature toughness without degradation of anti-dissolving property.

### [Cr: 28-32 %]

At least 28 % of Cr is necessary for corrosion-resistance in an environment to which separators are exposed. The corrosion-resistance is enhanced as an increase of Cr, but excess Cr degrades formability and low-temperature toughness. In this sense, an upper limit of Cr is determined at 32%.

### [Mo: 1.5-2.5 %]

At least 1.5 % of Mo is necessary for corrosion-resistance in an environment to which separators are exposed, but excess Mo causes hardening of stainless steel. Therefore, an upper limit of Mo is determined at 2.5 %.

### [Nb, Ti: 0.03 - 0.25 %]

Both Nb and Ti are elements effective for corrosion-resistance and formability of a welded part. In the inventive alloy system, C and N are fixed by Nb and Ti, respectively. The effect on fixation of C and N is noted at 0.03 % or more each of Nb and Ti, but excess Nb or Ti above 0.25 % is unfavorable for formability and low-temperature toughness.

### [Al: 0.04-0.20 %]

Fixation of N is stabilized by addition of Al in combination with Nb and Ti, resulting in enhancement of corrosion-resistance at a welded part. The effect of Al on fixation of N is noted at 0.04 % at least. However in the inventive alloy system containing P at a relatively high ratio, excess Al above 0.20 % puts harmful influence on low-temperature toughness.

### [V: 0.2-1.0%]

V is an optional element effective for corrosion-resistance of stainless steel in an acidic environment. The effect of V on corrosion-resistance is noted at 0.2 % at least in SO₄²⁻ and F⁻-containing internal atmospheres inside fuel cells. However, excess V is unfavorable for low-temperature toughness and productivity, so that an upper limit of V is determined at 1.0 %.

### [other elements]

The ferritic stainless steel proposed by the invention may contain other elements, unless its manufacturing cost, corrosion-resistance and contact resistance are significantly worsened by those elements. For instance, welded parts are improved in corrosion-resistance by addition of carbonitride-forming elements, e.g. Ta, Zr and/or Hf, within a range of 0.1-0.25 % or sulfide-forming elements, e.g. Mg, Ca and/or Y at a ratio of 0.1 % or less. W, Co and/or Sn may be added at 0.50 % at most for corrosion-resistance, and B may be added at 0.1 % at most for low-temperature toughness.

Other features of the present invention will be clearly understood from the following examples. Many alterations and modifications may be made by those having ordinary skill in the art without departing from the spirit and scope of the invention. Therefore, it must be understood that the illustrated example has been set forth only for the purposes of examples and that it should not be taken as limiting the invention as defined by the following claims.

### EXAMPLE

Several ferritic stainless steels of Table 1 were melted in a vacuum melting furnace, cast and hot-rolled. Each hot-rolled steel sheet was annealed, pickled and then processed to thickness of 0.1 mm by repetition of cold-rolling accompanied with intermediate annealing.

**Table 1: Chemical Composition of Ferritic Stainless Steels in Example**

| Steel Kind | Alloying elements (mass %) | | | | | | | | | | C+N | Ni+Cu | Note |
|---|---|---|---|---|---|---|---|---|---|---|---|---|---|
| | C | Si | Mn | P | S | Ni | Cr | Mo | N | Others | | | |
| F1 | 0.011 | 0.12 | 0.12 | 0.028 | 0.001 | 0.23 | 27.3 | 0.6 | 0.013 | | 0.024 | 0.23 | comparative example |
| F2 | 0.009 | 0.16 | 0.18 | 0.029 | 0.001 | 0.25 | 28.2 | 0.5 | 0.012 | | 0.021 | 0.25 | inventive example |
| F3 | 0.012 | 0.18 | 0.20 | 0.028 | 0.001 | 0.24 | 30.2 | 0.1 | 0.010 | | 0.022 | 0.24 | comparative example |
| F4 | 0.008 | 0.16 | 0.18 | 0.027 | 0.001 | 0.22 | 30.1 | 0.3 | 0.009 | | 0.017 | 0.22 | inventive example |
| F5 | 0.010 | 0.18 | 0.17 | 0.010 | 0.001 | 0.21 | 29.8 | 0.3 | 0.010 | | 0.020 | 0.21 | comparative example |
| F6 | 0.011 | 0.13 | 0.16 | 0.018 | 0.002 | 0.25 | 30.2 | 0.5 | 0.012 | | 0.023 | 0.25 | " |
| F7 | 0.013 | 0.15 | 0.14 | 0.027 | 0.001 | 0.25 | 30.2 | 0.3 | 0.010 | | 0.023 | 0.25 | inventive example |
| F8 | 0.012 | 0.16 | 0.16 | 0.048 | 0.001 | 0.26 | 30.4 | 0.4 | 0.013 | | 0.024 | 0.26 | " |
| F9 | 0.011 | 0.14 | 0.12 | 0.027 | 0.001 | 0.29 | 30.2 | 0.3 | 0.012 | | 0.023 | 0.29 | " |
| F10 | 0.012 | 0.21 | 0.13 | 0.028 | 0.001 | 0.26 | 30.4 | 0.4 | 0.012 | V:0.31 | 0.024 | 0.26 | " |
| F11 | 0.006 | 0.20 | 0.14 | 0.028 | 0.001 | 0.29 | 30.6 | 0.5 | 0.011 | Cu:0.3 | 0.016 | 0.59 | " |
| F12 | 0.011 | 0.16 | 0.16 | 0.030 | 0.001 | 0.12 | 28.2 | 1.5 | 0.011 | Cu:0.3, Nb: 0.12, V 0.05 | 0.021 | 0.24 | " |
| F13 | 0.007 | 0.15 | 0.18 | 0.030 | 0.001 | 0.18 | 30.2 | 2.1 | 0.011 | Nb: 0.12 Ti: 0.15 Al: 0.12, V: 0.05 | 0.018 | 0.18 | " |

| | | | | | | | | | | | | | |
|---|---|---|---|---|---|---|---|---|---|---|---|---|---|
| The underlined figures are values out of ranges defined by the invention. | | | | | | | | | | | | | |

A test piece of 100 mm square in size was sampled from each steel sheet and subjected to measurement of contact resistance. In the measurement, the test piece was held in contact with carbon paper, and its resistivity was measured by four terminal method at a pressure of 15 kgf/cm². Contact resistance ρ' (mΩ·cm²) was calculated from the measured value R (mΩ) according to the formula of ρ'=R×S (mΩ·cm²), wherein a surface area of the test piece was represented by S (cm²).

Thereafter, each steel sheet was stamped to a separator profile with gas channels of 0.4 mm in depth. The stainless steel separators were built in a cell unit with the structure that condensate water, produced by electrolytic reaction, was recycled to a side of a anode. Fluoroplastic parts were used as piping and pure water vessels other than the separators to build up a fuel cell. The fuel cell was operated for power generation, using hydrogen at a dew point of 90°C as a fuel gas and air as an oxidizing gas.

The fuel gas was pre-humidified by introducing hydrogen gas into a humidifier filled with 10 liters of pure water and then recycling condensate water, generated by electrolytic reaction, to the humidifier. Pure water was replenished every 500 hours to compensate for an evaporation loss and so on. After 2500 hours operation of the fuel cell, all the water was exchanged by fresh pure water and subjected to ICP-MASS analysis for measurement of metal ions therein. A dissolution rate of metals from the separator to the water was evaluated by a total of Fe, Cr, Ni, Mo and Cu.

Any fuel cell produced a power of 0.58-0.60 V at an initial stage, when it was operated at a fixed current density of 0.5 A/cm². An output of the fuel cell was measured at 2500 hours and 5000 hours during continuous operation. A degree of power decline was calculated according to the formula of [a degree of power decline (%)]=[(a voltage at each time)/(an initial voltage)] × 100. The separator, disassembled from the fuel cell after the 5000 hours operation, was also observed for evaluating propagation of corrosion.

Experimental results are shown in Table 2. It is noted that the separators, made of stainless steels with compositions defined by the invention, have contact resistance extremely lower than comparative examples, and dissolution of metals from the separators are suppressed to a lower level even after 2500 hours operation. The separators were scarcely corroded after 2500 or 5000 hours operation, and power decline was substantially undetected.

On the other hand, the comparative separators had high contact resistance (as noted in the steel kind F5) or were sometimes rusted (as noted in the steel kinds F1, F3 and F5) due to poor anti-dissolving property. The high contact resistance and formation of rust mean that these steels lack of durability necessary for separators of fuel cells.

It is clearly understood from the above comparison that employment of ferritic stainless steels, having compositions defined by the present invention, as separator material for fuel cells ensures construction of fuel cells which produce high output voltage over a long term.

**Table 2: Relationship of Separator Material with Reduction of Output Voltage and Corrosion of Separators**

| Steel Kind | Contact resistance (mΩ·cm²) | Dissolution of metals after 2500 hours operation (ppb) | Degree of power decline (%) after | | Corrosion of separators | Note |
|---|---|---|---|---|---|---|
| | | | 2500 hrs. | 5000 hrs. | | |
| F1 | 15 | 706 | 5 | 15 | rusted (general corrosion) | Comparative example |
| F2 | 14 | 321 | 0 0 | | slightly discolored | Inventive example |
| F3 | 15 | 682 | 3 | 12 | rusted (general corrosion) | Comparative example |
| F4 | 17 | 275 | 0 | 0 | slightly discolored | Inventive example |
| F5 | 136 | 678 | 3 | 15 | rusted (general corrosion) | Comparative example |
| F6 | 125 | 665 | 2 | 11 | rusted (general corrosion) | " |
| F7 | 18 | 260 | 0 | 0 | slightly discolored | Inventive example |
| F8 | 13 | 245 | 0 | 0 | slightly discolored | " |
| F9 | 17 | 300 | 0 | 0 | slightly rusted | " |
| F10 | 12 | 242 | 0 | 0 | slightly discolored | " |
| F11 | 13 | 223 | 0 | 0 | slightly discolored | " |
| F12 | 10 | 189 | 0 | 0 | slightly discolored | " |
| F13 | 11 | 125 | 0 | 0 | slightly discolored | " |

### INDUSTRIAL APPLICABILITY OF THE INVENTION

The ferritic stainless steels according to the alloy design specified as the above are useful as separator material for fuel cells. Such stainless steel separators, built in fuel cells, maintain low contact resistance in a state exposed to a wet and acidic internal atmosphere inside the fuel cells over a long term, and dissolution of metals from the separators is suppressed at a low level enough to protect ion-exchange membranes from contamination. Consequently, there are provided fuel cells which are excellent in durability with less power decline. Moreover, since the separators are made of stainless steel sheets having better formability than graphite blocks, fuel cells can be thinned and lightened.

## Claims

1. A ferritic stainless steel for use as separators of polymer electrolyte fuel cells, consisting essentially of, by mass, 0.020 % or less of C, 0.50 % or less of Si, 0.50 % or less of Mn, 0.020-0.080 % of P, 0.005 % or less of S, 0.50 % or less of Ni, 28-32 % of Cr, 1.5-2.5 % of Mo, 0.80 % or less of Cu, 0.03-0.25 % of Nb, 0.03-0.25 % of Ti, 0.04-0.20 % of Al, 0.020 % or less of N and the balance being Fe except inevitable impurities with C+N being 0.025 % or less and Ni+Cu being 0.80 % or less.

2. The ferritic stainless steel of Claim 1, wherein the ferritic stainless steel further contains 0.2-1.0 % of V.

3. A separator for polymer electrolyte fuel cells, said separator being made of the ferritic stainless steel defined by Claim 1 or 2.

4. A polymer electrolyte fuel cell involving separators made of the ferritic stainless steel defined by Claim 1 or 2.
